# FASCICULE DE BREVET EUROPEEN

(11) **EP 4 025 500 B1**
(45) Date de publication et mention de la délivrance du brevet: **25.10.2023**
(21) Numéro de dépôt: 20771992.3
(22) Date de dépôt: 02.09.2020
(51) Int. Cl.: B01D 53/86, B64D 13/06, F24F 3/16, F28D 9/00, F28F 9/02, B01D 53/04, B01D 53/34, B01D 53/88, F24F 8/167, F24F 8/98, F24F 13/28, F24F 13/30

(54) **ÉCHANGEUR DE CHALEUR D'UN SYSTEME DE CONDITIONNEMENT D'AIR D'UNE CABINE D'UN AÉRONEF ET SYSTÈME COMPRENANT UN TEL ÉCHANGEUR**
WÄRMETAUSCHER EINER KLIMAANLAGE EINER FLUGZEUGKABINE UND SYSTEM MIT EINEM SOLCHEN WÄRMETAUSCHER
HEAT EXCHANGER OF AN AIR-CONDITIONING SYSTEM OF A CABIN OF AN AIRCRAFT, AND SYSTEM COMPRISING SUCH A HEAT EXCHANGER

(30) Priorité: 02.09.2019 FR 1909639
(43) Date de publication de la demande: 13.07.2022
(73) Titulaire: Liebherr-Aerospace Toulouse SAS, 31200 Toulouse (FR)
(72) Inventeur: DREIBINE, Lamia, 31016 TOULOUSE Cedex 2 (FR); XENARD, Luc, 31016 TOULOUSE Cedex 2 (FR); JACQUART, Jérôme, 31016 TOULOUSE Cedex 2 (FR)
(74) Mandataire: Bringer IP
(86) Numéro de dépôt international: PCT/EP2020/074493
(87) Numéro de publication internationale: WO 2021/043839

(56) Documents cités:
- EP-A1- 3 453 621
- EP-A2- 0 186 477
- WO-A1-2018/194457
- FR-A1- 3 011 819
- FR-A5- 2 037 366
- US-A1- 2005 191 223
- US-A1- 2006 075 775

## Description

### Domaine technique de l'invention

L'invention concerne un échangeur de chaleur d'un système de conditionnement d'air. L'invention concerne également un système de conditionnement d'air d'une cabine d'un aéronef équipé d'un tel échangeur de chaleur Un tel échangeur et système est connu par ex. de US 2005 191223 A1.

### Arrière-plan technologique

Un système de conditionnement d'air d'une cabine d'un véhicule de transport, par exemple un aéronef, est destiné à fournir à la cabine d'aéronef (qui désigne de manière générale tout espace intérieur de l' aéronef dont la pression et/ou la température doit être contrôlée, tel qu'une cabine pour passagers, le cockpit de pilotage, une soute, etc.) un air à pression et/ou température contrôlées. Dans tout le texte, le terme « turbine » désigne un dispositif rotatif destiné à utiliser l'énergie cinétique de l'air pour faire tourner un arbre supportant les aubes de la turbine. Le terme « compresseur » désigne un dispositif rotatif destiné à augmenter la pression de l'air qu'il reçoit en entrée.

Un système de conditionnement d'air d'une cabine d'un aéronef, comprend de manière connue un dispositif de prélèvement d'air comprimé sur au moins un compresseur d'un moteur de l'aéronef (tel que par exemple un moteur propulsif ou un moteur auxiliaire de l'aéronef).

Un tel système de conditionnement d'air connu comprend également une turbomachine à cycle à air comprenant au moins un compresseur et une turbine couplés mécaniquement l'un à l'autre, ledit compresseur comprenant une entrée d'air reliée audit dispositif de prélèvement d'air comprimé et une sortie d'air, et ladite turbine comprenant une entrée d'air et une sortie d'air reliée à ladite cabine, pour pouvoir l'alimenter en air à pression et température contrôlées.

Selon une variante, le compresseur de la turbomachine à cycle à air est directement alimenté par de l'air ambiant prélevé à l'extérieur de l'aéronef et la compression de l'air est assurée directement par le compresseur de la turbomachine à cycle à air.

L'air comprimé contient de l'ozone et d'autres polluants tels que des composants organiques volatils connus également sous l'appellation de COV. En outre, la concentration en ozone et en polluants est substantielle lorsque l'air comprimé est prélevé à une certaine altitude et l'air contenant de l'ozone peut provoquer des irritations oculaires, des gênes respiratoires et cardiovasculaires pour les passagers de la cabine alimentée par cet air.

Les systèmes de conditionnement d'air utilisent aujourd'hui couramment des convertisseurs d'ozone pour éliminer l'ozone et les polluants de l'air avant leur introduction dans la cabine. Un convertisseur d'ozone se présente sous la forme d'une cartouche catalytique et est agencé dans un système de conditionnement d'air.

Aussi, le convertisseur d'ozone est une pièce qui peut être intégrée dans les conduites d'un circuit de conditionnement d'air pour traiter l'air qui alimente la cabine. Ceci engendre un encombrement d'espace au sein du système de conditionnement d'air et également une augmentation de poids de l'aéronef.

Les inventeurs ont donc cherché une solution nouvelle consistant à diminuer l'encombrement et la masse embarquée d'un système de conditionnement d'air.

Les inventeurs ont notamment cherché un système de traitement de l'air qui puisse être utilisé, non seulement dans le cadre des systèmes de conditionnement d'air d'un véhicule de transport, tel qu'un aéronef, mais également dans tous types de systèmes de prélèvement nécessitant le traitement d'un l'air pollué contenant de l'ozone et des polluants avant d'être distribué dans la cabine, ou tous types de systèmes de prélèvement qui pourraient traiter l'air à l'entrée du système de contrôle environnemental.

### Objectifs de l'invention

L'invention vise à fournir un système de conditionnement d'air qui contribue à pallier au moins certains inconvénients des solutions connues.

L'invention vise en particulier à fournir, dans au moins un mode de réalisation, un système de conditionnement d'air qui contribue à diminuer l'encombrement et la masse embarqués dans un véhicule de transport.

L'invention vise également à fournir, dans au moins un mode de réalisation, un système de conditionnement d'air qui contribue à traiter l'air alimentant une cabine d'un véhicule de transport.

L'invention vise aussi à fournir, dans au moins un mode de réalisation, un système de conditionnement d'air qui facilite la maintenance d'un tel système.

### Exposé de l'invention

Pour ce faire, l'invention concerne un échangeur de chaleur d'un système de conditionnement d'air d'une cabine d'un véhicule de transport comprenant :
- un circuit primaire alimenté par un premier flux d'air, dit flux d'air chaud,
- un circuit secondaire alimenté par un deuxième flux d'air, dit flux d'air froid,
- un carter définissant une enceinte de circulation d'air dans laquelle est logée une matrice d'échanges thermiques entre ledit circuit primaire et ledit circuit secondaire,
- un boitier d'entrée du circuit primaire dans ladite enceinte de circulation d'air,
- un boitier de sortie du circuit primaire hors de l'enceinte de circulation d'air.

L'échangeur de chaleur selon l'invention est caractérisé en ce que ledit boitier d'entrée est monté de manière amovible sur ledit carter et en ce qu'il loge une structure tridimensionnelle formant un support catalytique et/ou adsorbant pour traiter l'air dudit circuit primaire et un moyen de répartition dudit premier flux d'air dans ladite matrice d'échanges thermiques.

L'échangeur de chaleur selon l'invention présente donc la particularité de pouvoir traiter l'air circulant dans la matrice d'échanges thermiques de l'échangeur et de répartir uniformément l'air au sein de cette matrice pour améliorer les échanges thermiques entre le circuit primaire et le circuit secondaire.

On entend par structure tridimensionnelle une structure formant un support catalytique et/ou adsorbant et dont le ratio surface géométrique (surface d'échanges) par volume est élevé.

Le principal avantage d'une telle structure tridimensionnelle réside dans sa double fonction de répartir le flux d'air uniformément et de traiter l'air pollué. En effet, l'air véhiculé par le circuit primaire est réparti à travers la structure tridimensionnelle de sorte qu'il s'introduit de manière uniforme dans l'entrée de l'enceinte de circulation. L'utilisation d'une telle structure tridimensionnelle permet en outre d'augmenter la surface d'échanges entre le support catalytique et/ou adsorbant et l'air alimentant le circuit primaire. Ceci permet d'une part d'améliorer les échanges thermiques entre le support catalytique et/ou adsorbant et l'air du circuit primaire, et permet d'autre part un gain de place.

Ladite structure tridimensionnelle forme un substrat catalytique et/ou adsorbant comprenant un catalyseur permettant la conversion de l'ozone et le traitement des polluants contenus dans l'air véhiculé par le circuit primaire circulant dans l'enceinte de circulation dudit échangeur de chaleur et/ou un adsorbant permettant l'adsorption des polluants non catalysés. L'ozone contenu dans l'air est nocif, par conséquent il est essentiel de le convertir à l'aide d'un substrat catalytique qui permet de le transformer en dioxygène nécessaire aux réactions impliquées dans la respiration.

La conversion de l'ozone se fait par voie catalytique où les sites actifs transforment les molécules d'ozone en radicaux libres d'oxygène qui à leur tour reforment des molécules de dioxygène respirables, par exemple tel que décrit dans le brevet GB 2 009 392 A.

Les polluants et notamment les composants organiques volatils (COV) regroupent les hydrocarbures qui sont à l'origine des odeurs désagréables tel que l'odeur du carburant dans la cabine au cours du décollage ou pendant le vol. Les COV interviennent dans le processus de formation de l'ozone avec l'oxyde d'azote et entrent aussi dans la composition de carburant, ceci explique leur quantité élevée dans l'air et plus particulièrement en basse atmosphère. D'une part, le support catalytique et/ou adsorbant sous forme de structure tridimensionnelle favorise la conversion de l'ozone en dioxygène et d'autre part traite les polluants et notamment les COV.

Le traitement des polluants peut se faire par :
a. piégeage d'une partie des polluants, de préférence les COV, sur la structure tridimensionnelle par chimisorption, de sorte que les polluants, de préférence les COV soient adsorbés sur la structure tridimensionnelle sans être transformés ; et/ou
b. voie catalytique thermique par laquelle les polluants restants, de préférence les COV restants, subissent une minéralisation par l'action simultanée d'un catalyseur et d'une température élevée, de l'ordre de 300°C afin de transformer les polluants en dioxyde de carbone.

En d'autres termes, ladite structure tridimensionnelle est adaptée pour convertir l'ozone et traiter les composants organiques volatils contenus dans l'air alimentant le circuit primaire.

En outre, le boitier d'entrée du circuit primaire alimentant l'enceinte de circulation est monté de manière amovible de sorte que le ledit boitier d'entrée peut être détaché, dans le but d'être retiré, du carter délimitant l'enceinte de circulation de l'échangeur de chaleur par le biais d'un système de fixation réversible. Le système de fixation réversible peut être un système de vissage, un emboitage élastique à partir d'un clip ou tout autre système permettant de monter de manière amovible le boitier d'entrée sur le carter. On entend par boitier d'entrée, une trémie ou une boite, délimitant un volume dans lequel est logée ladite structure tridimensionnelle.

Le boitier d'entrée détachable présente un intérêt lors de la maintenance. En effet, la fréquence de maintenance d'un convertisseur d'ozone tel que décrit dans l'art antérieur est plus élevée que la fréquence de maintenance d'un échangeur. Etant donné que le boitier d'entrée est détachable, la maintenance de la structure tridimensionnelle peut être réalisée sans nécessairement effectuer la maintenance de l'échangeur.

Par conséquent, l'installation et la maintenance de la structure tridimensionnelle logée dans ledit boitier d'entrée est ainsi facilitée. De fait, cette structure tridimensionnelle peut également être retirée facilement pour être changée.

En outre, l'intégration d'une structure tridimensionnelle selon l'invention dans un boitier d'entrée de l'échangeur de chaleur permet de diminuer le nombre d'interfaces et de fixations agencées sur la structure de l'aéronef ce qui contribue à rendre ce dernier plus léger et par conséquent plus économique en termes de consommation de carburant.

Plus particulièrement, un échangeur de chaleur selon l'invention est par exemple agencé dans un canal de circulation d'air dynamique prélevé à l'extérieur d'un aéronef. Il s'agit par exemple d'un échangeur principal de refroidissement d'un système de conditionnement d'air plus connu sous l'acronyme anglais MHX pour *Main Heat Exchanger* ou un échangeur primaire de refroidissement plus connu sous l'acronyme anglais PHX pour *Primary Heat Exchanger.*

Avantageusement et selon l'invention, ladite structure tridimensionnelle est une mousse métallique revêtue d'un catalyseur.

Selon cette variante, ladite structure tridimensionnelle est sous la forme d'une mousse métallique architecturée comme un catalyseur. Ladite mousse présente par exemple une structure alvéolaire avec une forme macroscopique comprenant des alvéoles délimitées par des arêtes. Les alvéoles et les arêtes de la structure alvéolaire sont agencées de manière irrégulière entrainant ainsi une perturbation de la circulation du flux d'air. La structure alvéolaire permet donc d'augmenter la surface d'échanges entre le support catalytique et/ou adsorbant formé par ladite mousse et l'air circulant dans le boitier d'entrée.

D'une part, lesdites alvéoles de la mousse, définies par des espaces ceux de la structure alvéolaire permettant le passage de l'air, permettent à la fois de distribuer l'air de manière uniforme dans l'enceinte de circulation d'air et d'assurer une bonne conductivité thermique.

D'autre part, lesdites arêtes, définies par la structure entourant les alvéoles, permettent d'augmenter la turbulence du flux d'air dans le lit catalytique, défini par le volume occupé par ledit support catalytique. En outre, l'augmentation de la turbulence entraine par conséquent l'augmentation du temps de contact entre l'air pollué et la surface dudit catalyseur.

Le catalyseur est déposé sur la mousse métallique de manière à permettre la conversion de l'ozone en dioxygène et de traiter certains polluants tels que des composants organiques volatils contenus dans l'air circulant dans l'enceinte de circulation dudit échangeur de chaleur.

Ledit catalyseur comprend une phase active constituée d'un ou de plusieurs métaux nobles tels que par exemple des métaux du groupe du platine (en langue anglaise Platinum Group Metal (PGM)) déposés sur des oxydes mixtes de métaux tels que par exemple l'Oxyde de Manganèse, Oxyde de Titane, Alumine...

La mousse est par exemple constituée de différents matériaux connus de l'Homme de Métier, comme des céramiques (mélanges d'oxyde ou de carbure) ou d'un métal tel que de l'aluminium ou ses alliages comme par exemple le FeCrAl. Ledit matériau formant la mousse est poreux (macro, méso ou microporeux) pour permettre un meilleur échange entre l'air pollué et la surface de traitement.

L'avantage d'une mousse métallique ou en céramique réside dans sa capacité à assurer ou à maintenir l'isothermicité du lit catalytique.

Avantageusement et selon l'invention, ladite structure tridimensionnelle est une mousse en céramique revêtue d'un catalyseur.

Selon cette variante, ladite structure tridimensionnelle est sous forme d'une mousse en céramique qui présente une bonne stabilité lors d'exposition aux hautes températures sous atmosphère oxydante.

En outre, une mousse métallique ou céramique est modulable et permet ainsi de s'adapter à tout type de forme de boitier d'entrée ou de sortie. Aussi, elle peut être facilement intégrée et retirée audit boitier d'entrée sans difficulté. Ledit boitier d'entrée peut également présenter différentes formes étant donné que la structure tridimensionnelle est modulable de sorte à s'adapter au boitier d'entrée ou de sortie.

Avantageusement et selon l'invention, ledit boitier de sortie est monté de manière amovible sur ledit carter et loge également une structure tridimensionnelle formant un support catalytique et/ou adsorbant pour traiter l'air dudit circuit primaire.

Selon cette variante, ladite structure tridimensionnelle est logée en outre dans le boitier de sortie de manière à traiter l'air de l'ozone et des polluants en sortie de l'échangeur de chaleur.

En outre, le boîtier de sortie est monté de manière amovible sur ledit carter afin de pouvoir être détaché du carter délimitant l'enceinte de circulation et ainsi faciliter la maintenance de la structure tridimensionnelle logé dans la boite de sortie.

Aussi, la présence d'une structure tridimensionnelle en entrée et en sortie de l'échangeur permet d'augmenter les surfaces d'échanges entre le premier flux d'air et le support catalytique et/ou adsorbant et en particulier d'améliorer les échanges thermiques et donc le traitement de l'air en sortie de l'échangeur.

Avantageusement et selon l'invention, le type de support catalytique et/ou adsorbant logé dans le boitier d'entrée peut être différent du type de support catalytique et/ou adsorbant logé dans le boitier de sortie afin de pouvoir traiter différents types de composants organiques volatils. En effet, le deuxième support catalytique et/ou adsorbant logé dans le boitier de sortie peut être plus sélectif vis-à-vis des composants organiques volatils de manière à améliorer le traitement de l'air et donc la qualité de l'air.

Avantageusement et selon l'invention, ladite structure tridimensionnelle est définie par des alvéoles ouvertes de taille comprise entre 5 et 10 PPI.

Selon cette variante, la structure tridimensionnelle est formée par une mousse qui comprend des alvéoles ouvertes formant un réseau interconnecté. La taille des alvéoles est exprimée en PPI (*Pore Per Inch* en langue anglaise et l'on considère qu'un *inch* équivaut à 25,4 millimètres (mm)). Ainsi, la taille des alvéoles peut être comprise entre 5 et 50 PPI, c'est à dire entre 5 et 50 pores par 25,4 mm de préférence entre 10 PPI et 30 PPI (entre 10 et 30 pores par 25,4 mm) et encore plus préférentiellement de l'ordre 20 PPI (20 pores par 25,4 mm).

L'avantage d'une telle structure tridimensionnelle réside dans son poids plus léger étant donné qu'il ne s'agit pas d'une structure monolithique pleine. Ainsi, cette structure tridimensionnelle permet un gain de masse mais également un gain de place vu qu'elle est logée dans un boitier d'entrée d'un échangeur de chaleur.

L'invention concerne également un système de conditionnement d'air d'une cabine d'un véhicule de transport comprenant au moins un échangeur de chaleur conforme à l'invention.

Les avantages et effets d'un échangeur de chaleur selon l'invention s'appliquent *mutatis mutandis* à un système de conditionnement d'air selon l'invention.

L'invention concerne aussi un véhicule de transport aérien comprenant au moins un moteur propulsif, une cabine et au moins un système de conditionnement d'air de ladite cabine, caractérisé en ce que le système de conditionnement d'air de la cabine est un système selon l'invention.

Les avantages et effets d'un système de conditionnement d'air selon l'invention s'appliquent *mutatis mutandis* à un véhicule de transport aérien ou ferroviaire selon l'invention.

L'invention concerne également un échangeur de chaleur, un système de conditionnement d'air et un véhicule de transport aérien, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de conditionnement d'air selon un mode de réalisation de l'invention,
[Fig. 2] est une vue schématique en coupe d'un échangeur de chaleur selon un mode de réalisation de l'invention,
[Fig. 3] est une vue schématique en perspective d'un aéronef selon un mode de réalisation de l'invention.

### Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, sauf indication contraire, chaque élément de l'échangeur de chaleur est décrit tel qu'il est agencé lorsque l'échangeur est logé dans un canal de circulation d'air dynamique d'un système de conditionnement d'air d'une cabine d'un aéronef et alimenté d'une part par un air chaud issu d'un dispositif de prélèvement d'air extérieur tel qu'un dispositif de prélèvement d'air sur un compresseur d'un moteur propulsif de l'aéronef, et d'autre part par un air à pression dynamique prélevé à l'extérieur de l'aéronef depuis une écope.

Ainsi, dans toute la suite, la description considère que l'échangeur de chaleur est installé au sein d'un système de conditionnement d'air, étant entendu que l'échangeur de chaleur selon l'invention peut être utilisé pour d'autres applications que le refroidissement d'un air haute température, prélevé par exemple sur un moteur propulsif d'un aéronef. Il peut notamment équiper un système de conditionnement d'air d'un véhicule ferroviaire.

Enfin, les éléments identiques, similaires ou analogues sont désignés par les mêmes références dans toutes les figures.

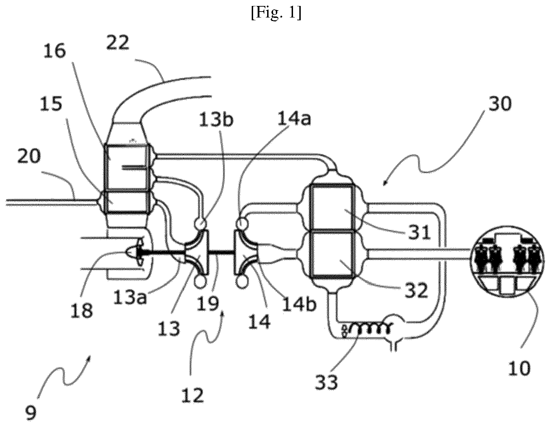

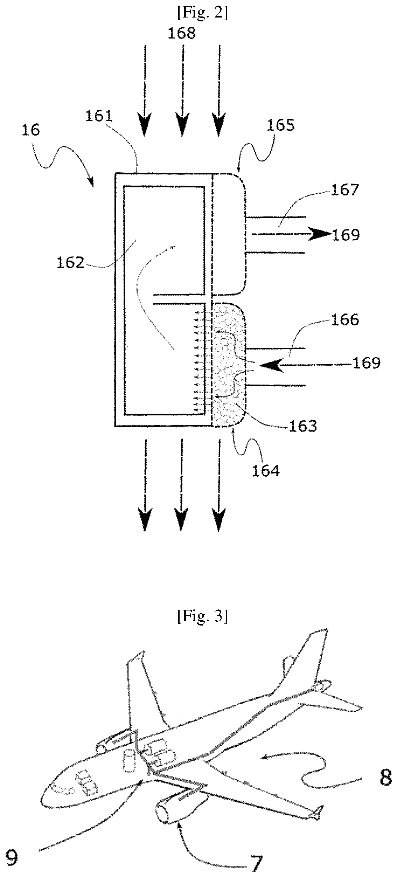

La figure 1 illustre de manière schématique un système de conditionnement d'air d'une cabine d'un aéronef intégrant un échangeur de chaleur selon l'invention. La figure 2 illustre de manière schématique un échangeur de refroidissement d'un circuit primaire chaud par un circuit secondaire froid.

La figure 1 illustre de manière schématique un système 9 de conditionnement d'air d'une cabine 10 d'un aéronef 8 comprenant une turbomachine 12 à cycle à air comprenant un compresseur 13 et une turbine 14 de détente couplés mécaniquement l'un à l'autre par un arbre mécanique 19. Cet arbre mécanique 19 entraine également un ventilateur 18.

Le compresseur 13 comprend une entrée d'air 13a reliée à un dispositif de prélèvement d'air sur une source d'air non représentée sur les figures à des fins de clarté par l'intermédiaire d'un échangeur primaire de refroidissement, aussi désigné par les termes d'échangeur PHX 15 dans toute la suite (pour *Primary Heat Exchanger* en langue anglaise), et d'une conduite 20 reliant fluidiquement le dispositif de prélèvement d'air et l'échangeur PHX 15.

En d'autres termes, l'air issu du dispositif de prélèvement d'air, qui est par exemple un dispositif de prélèvement d'air sur un compresseur d'un moteur 7 propulsif de l'aéronef ou un dispositif de prélèvement d'air sur un compresseur d'un moteur auxiliaire de l'aéronef, voire un dispositif de prélèvement d'air sur une écope de l'aéronef associée ou non à un compresseur intermédiaire, alimente le compresseur 13 de la turbomachine à cycle à air 12 après passage dans un échangeur primaire PHX 15. Cet échangeur PHX15 comprend un circuit primaire formé par l'air délivré par le dispositif de prélèvement d'air par l'intermédiaire de la conduite 20 et un circuit secondaire alimenté par un air à pression dynamique, qui circule dans un canal 22 de circulation d'un air dynamique, dit ci-après canal d'air dynamique.

La circulation d'air dynamique dans le canal 22 d'air dynamique est assurée par le ventilateur 18 monté sur l'arbre 19 de la turbomachine à cycle à air qui s'étend jusque dans le canal 22 d'air dynamique. Selon d'autres variantes, le ventilateur 18 peut être disjoint de l'arbre 19 et entrainé en rotation par un moteur électrique indépendant.

Le compresseur 13 comprend également une sortie d'air 13b reliée fluidiquement à un échangeur principal de refroidissement, aussi désigné par l'acronyme MHX 16 par la suite (pour *Main Heat Exchanger* en langue anglaise), qui est agencé dans le canal 22 de circulation d'air dynamique prélevé à l'extérieur de l'aéronef.

Cet échangeur MHX 16 comprend par exemple, et tel que représenté sur la figure 2, un circuit primaire chaud alimenté par le flux d'air 169 issu du compresseur 13 et un circuit secondaire froid, en interaction thermique avec le circuit primaire, alimenté par le flux d'air 168 froid dynamique circulant dans le canal 22 d'air dynamique. En d'autres termes, l'air 169 issu du compresseur 13 est refroidi, dans l'échangeur MHX 16, par l'air 168 dynamique circulant dans le canal 22 de circulation d'air dynamique. En outre, le boitier 164 d'entrée de cet échangeur est détachable et comprend une mousse 163 métallique permettant de traiter l'air de l'ozone et des composants et également de répartir l'air dans l'enceinte 162 de circulation de l'échangeur MHX 16. Aussi, la mousse 163 métallique, logée dans le boitier 164 d'entrée du flux d'air 169 du circuit primaire, retient l'ozone et les polluants et permet de répartir le flux d'air 169 de manière uniforme dans l'enceinte 162 de circulation de l'échangeur MXH 16.

Cette répartition uniforme de l'air améliore ainsi les échanges thermiques entre les flux d'air des circuits primaire et secondaire. De plus, l'agencement de la mousse dans le boîtier d'entrée de l'échangeur permet à la fois un gain de place et de faciliter la maintenance.

La turbine 14 de détente de la turbomachine à cycle à air 12 comprend une entrée d'air 14a alimentée par l'air issu de l'échangeur MHX 16 après passage par une boucle 30 d'extraction d'eau, qui sera décrite ci-après, et une sortie d'air 14b reliée à ladite cabine 10, pour pouvoir l'alimenter en air à pression et température contrôlées.

La boucle d'extraction d'eau 30 comprend un réchauffeur 31 comprenant un circuit primaire d'air alimenté par l'air issu de l'échangeur principal MHX 16, en interaction thermique avec un circuit secondaire alimenté par l'air issu d'un extracteur 33 d'eau et destiné à alimenter l'entrée 14a de la turbine de détente.

La boucle d'extraction d'eau 30 comprend également un condenseur 32 comprenant un circuit primaire d'air alimenté par le flux d'air en sortie du réchauffeur 31, en interaction thermique avec un circuit secondaire d'air alimenté par le flux d'air issu de la turbine 14 de détente, pour permettre une condensation du flux d'air du circuit primaire.

Enfin, la boucle d'extraction d'eau comprend également un extracteur d'eau 33 agencé en sortie du condenseur 32 et configuré pour pouvoir récupérer l'eau condensée par le condenseur et la délivrer à une conduite de distribution d'eau (non représentée sur la figure 1).

La figure 2 illustre la répartition du flux d'air 169 chaud du circuit primaire au sein d'un échangeur MHX 16 logé dans un canal de circulation d'air 168 dynamique prélevé à l'extérieur d'un aéronef. L'air 169 chaud comprimé circule dans la conduite 166 reliant le compresseur et l'échangeur MHX 16 avant de pénétrer dans le boitier 164 d'entrée monté de manière amovible par vissage sur le carter 161 délimitant l'enceinte 162 de circulation comprenant une matrice d'échanges thermiques (non représentée). Le boitier 164 d'entrée détachable comprend une mousse 163 métallique présentant des alvéoles de tailles comprises entre 10 et 30 PPI permettant la répartition de l'air 169 chaud au sein de la matrice d'échanges thermique et la conversion de l'ozone et des polluants contenus dans l'air par le biais de la mousse métallique. L'air 169 chaud circule donc entre le boitier 164 d'entrée et l'enceinte 162 de circulation de manière uniforme grâce à la mousse 163 métallique qui répartit le flux homogènement. Le flux d'air 169 chaud circule dans l'enceinte 162 de circulation entre le boitier 164 d'entrée et le boitier 165 de sortie respectivement reliés à une conduite 166 d'entrée et une conduite 167 de sortie de flux d'air chaud.

Selon un autre mode de réalisation, le boitier 165 de sortie peut également être détachable de manière à pouvoir accueillir une mousse 170 métallique qui permet de compléter le traitement de l'air en entrée. La mousse 170 logée dans le boitier 165 de sortie est utilisée uniquement à des fins de traitement de l'air.

## Revendications

1. Échangeur de chaleur d'un système de conditionnement d'air d'une cabine d'un véhicule de transport comprenant :
- un circuit primaire alimenté par un premier flux d'air (169), dit flux d'air chaud,
- un circuit secondaire alimenté par un deuxième flux d'air (168), dit flux d'air froid,
- un carter (161) définissant une enceinte (162) de circulation d'air dans laquelle est logée une matrice d'échanges thermiques entre ledit circuit primaire et ledit circuit secondaire,
- un boitier (164) d'entrée du circuit primaire dans ladite enceinte de circulation d'air,
- un boitier (165) de sortie du circuit primaire hors de l'enceinte de circulation d'air,
**caractérisé en ce que** ledit boitier (164) d'entrée est monté de manière amovible sur ledit carter (161) et **en ce qu'**il loge une structure (163) tridimensionnelle formant un support catalytique et/ou adsorbant pour traiter l'air dudit circuit primaire et un moyen de répartition dudit premier flux d'air dans ladite matrice d'échanges thermiques.

2. Échangeur de chaleur selon la revendication 1, **caractérisé en ce que** ladite structure (163) tridimensionnelle est une mousse métallique revêtue d'un catalyseur.

3. Échangeur de chaleur selon la revendication 1, **caractérisé en ce que** ladite structure (163) tridimensionnelle est une mousse en céramique revêtue d'un catalyseur.

4. Échangeur de chaleur selon l'une des revendications 1 à 3, caractérisé en ce ledit boîtier (165) de sortie est monté de manière amovible sur ledit carter (161) et loge également une structure (170) tridimensionnelle formant un support catalytique et/ou adsorbant pour traiter l'air dudit circuit primaire.

5. Échangeur de chaleur selon l'une de revendication 1 à 4, **caractérisé en ce que** ladite structure tridimensionnelle est définie par des alvéoles ouvertes de taille comprise entre 5 et 10 PPI.

6. Système (9) de conditionnement d'air d'une cabine (10) d'un véhicule (8) de transport comprenant au moins un échangeur de chaleur conforme à l'une des revendications 1 à 5.

7. Véhicule (8) de transport, notamment aérien, comprenant au moins un moteur propulsif (7), une cabine (10) et au moins un système (9) de conditionnement d'air de ladite cabine, **caractérisé en ce que** le système de conditionnement d'air de la cabine est un système de conditionnement d'air selon la revendication 6.

## Patentansprüche

1. Wärmetauscher einer Klimaanlage einer Kabine eines Transportfahrzeugs, welcher umfasst:
- einen Primärkreislauf, der von einem ersten Luftstrom (169), dem sogenannten Warmluftstrom, gespeist wird,
- einen Sekundärkreislauf, der von einem zweiten Luftstrom (168), dem sogenannten Kaltluftstrom, gespeist wird,
- ein Gehäuse (161), das einen Luftzirkulationsraum (162) definiert, in dem eine Wärmetauschmatrix zwischen dem Primärkreislauf und dem Sekundärkreislauf untergebracht ist,
- einen Einlasskasten (164), der den Eintritt des Primärkreislaufs in den Luftzirkulationsraum ermöglicht,
- einen Auslasskasten (165), der den Austritt des Primärkreises aus dem Luftzirkulationsraum ermöglicht,
**dadurch gekennzeichnet, dass** der Einlasskasten (164) entfernbar an dem Gehäuse (161) angebracht ist und dass er eine dreidimensionale Struktur (163), die einen Katalysator- und/oder Adsorptionsträger zur Behandlung der Luft des Primärkreislaufs ausbildet, und ein Mittel zur gleichmäßigen Verteilung des ersten Luftstroms in der Wärmetauschmatrix umfasst.

2. Wärmetauscher nach Anspruch 1, **dadurch gekennzeichnet, dass** die dreidimensionale Struktur (163) ein mit einem Katalysator beschichteter Metallschaum ist.

3. Wärmetauscher nach Anspruch 1, **dadurch gekennzeichnet, dass** die dreidimensionale Struktur (163) ein mit einem Katalysator beschichteter Keramikschaum ist.

4. Wärmetauscher nach einem der Ansprüche 1 bis 3, **dadurch gekennzeichnet, dass** der Auslasskasten (165) entfernbar an dem Gehäuse (161) angebracht ist und zudem eine dreidimensionale Struktur (170) umfasst, die einen Katalysator- und/oder Adsorptionsträger zur Behandlung der Luft des Primärkreislaufs ausbildet.

5. Wärmetauscher nach einem der Ansprüche 1 bis 4, **dadurch gekennzeichnet, dass** die dreidimensionale Struktur durch offene Zellen mit einer Größe zwischen 5 und 10 PPI definiert ist.

6. Klimaanlage (9) einer Kabine (10) eines Transportfahrzeugs (8), das mindestens einen Wärmetauscher nach einem der Ansprüche 1 bis 5 umfasst.

7. Transportfahrzeug (8), insbesondere Lufttransportfahrzeug, mit mindestens einem Triebwerk (7), einer Kabine (10) und mindestens einer Klimaanlage (9) für die Kabine, **dadurch gekennzeichnet, dass** die Klimaanlage für die Kabine eine Klimaanlage nach Anspruch 6 ist.

## Claims

1. Heat exchanger of an air-conditioning system of a cabin of a transport vehicle, comprising:
- a primary circuit supplied by a first air flow (169), called the hot air flow,
- a secondary circuit supplied by a second air flow (168), called the cold air flow,
- a casing (161) defining an air-circulation enclosure (162) in which a heat-exchange matrix is housed between said primary circuit and said secondary circuit,
- an inlet box (164) allowing the primary circuit to enter into said air-circulation enclosure,
- an outlet box (165) allowing the primary circuit to exit from the air-circulation enclosure,
**characterized in that** said inlet box (164) is mounted removably on said casing (161) and **in that** it houses a three-dimensional structure (163) forming a catalytic and/or adsorbent support for treating the air of said primary circuit, and a means for uniformly distributing said first air flow into said heat-exchange matrix.

2. Heat exchanger according to claim 1, **characterized in that** said three-dimensional structure (163) is a metal foam coated with a catalyst.

3. Heat exchanger according to claim 1, **characterized in that** said three-dimensional structure (163) is a ceramic foam coated with a catalyst.

4. Heat exchanger according to one of claims 1 to 3, **characterized in that** said outlet box (165) is removably mounted on said casing (161) and also houses a three-dimensional structure (170) forming a catalytic and/or adsorbent support for treating the air of said primary circuit.

5. Heat exchanger according to one of claims 1 to 4, **characterized in that** said three-dimensional structure is defined by open cells sized between 5 and 10 PPI.

6. Air-conditioning system (9) of a cabin (10) of a transport vehicle (8), comprising at least one heat exchanger according to one of claims 1 to 5.

7. Transport vehicle (8), in particular an air transport vehicle, comprising at least one propulsion engine (7), a cabin (10) and at least one air conditioning system (9) for said cabin, **characterized in that** the air-conditioning system for the cabin is an air-conditioning system according to claim 6.
